# DEMANDE DE BREVET EUROPEEN

(11) **EP 4 624 328 A1**
(43) Date de publication de la demande: **01.10.2025**
(21) Numéro de dépôt: 25165745.8
(22) Date de dépôt: 24.03.2025
(51) Int. Cl.: B64D 1/10

(54) **RACK DE STOCKAGE D' EMPORTS LARGABLES**

(30) Priorité: 25.03.2024 FR 2402942
(71) Demandeur: Dassault Aviation, 75008 Paris (FR)
(72) Inventeur: GUERINEAU, Julien, 33701 MERIGNAC CEDEX (FR)
(74) Mandataire: Lavoix

(57) **Abrégé**

La présente invention concerne un rack de stockage (26) d'emports largables (32) pour aéronef (10), comprenant au moins un module de stockage (42), le module de stockage (42) comprenant un compartiment (44) et un tiroir (46).

Le tiroir (46) délimite au moins deux logements de stockage (60) d'emports largables (32), les logements (60) étant agencés successivement les uns à la suite des autres dans une direction transversale (Y) du rack, chaque logement (60) étant allongé selon une direction d'allongement non parallèle à la direction transversale (Y).

Le tiroir (46) est mobile par rapport au compartiment (44) dans la direction transversale (Y) entre une position rentrée, dans laquelle le tiroir (46) est disposé à l'intérieur du compartiment (44), et une position sortie, dans laquelle le tiroir (46) est disposé au moins en partie en dehors du compartiment (44).

## Description

La présente invention concerne un rack de stockage d'emports largables.

Les missions de patrouille destinées à être réalisées par un aéronef sont variées. Elles incluent des missions de surveillance, de soutien à une force navale (support et protection), des missions de renseignement, des missions de recherche et de sauvetage, des missions de contrôle ou de police maritime, notamment dans le cadre de la surveillance des pêches, de lutte contre les narcotrafiquants ou de lutte contre la piraterie.

L'aéronef est alors destiné à embarquer en cabine des emports largables, par exemple des bouées portant des capteurs acoustiques, des marqueurs pour sauvetage, des fumigènes.

L'aéronef comprend pour ce faire des racks de stockage dans lesquels les emports largables sont stockés à l'horizontale. Les contraintes dimensionnelles de l'aéronef peuvent impacter leur intégration. De plus, les contraintes évolutives des missions et la capacité de stockage devront également répondre au besoin militaire.

Les racks de stockage connus présentent un encombrement important, aucun moyen d'inventaire et une masse importante du fait qu'ils sont soudés.

Le but de l'invention est alors de proposer un rack de stockage permettant d'embarquer tout type d'emport largable, avec une bonne capacité de stockage et un encombrement faible.

Un but additionnel est de permettre une utilisation facilitée d'un tel rack.

A cet effet, l'invention a pour objet un rack de stockage d'emports largables pour aéronef, comprenant au moins un module de stockage, le module de stockage comprenant un compartiment et un tiroir, le tiroir délimitant au moins deux logements de stockage d'emports largables, les logements étant agencés successivement les uns à la suite des autres dans une direction transversale du rack, chaque logement étant allongé selon une direction d'allongement non parallèle à la direction transversale, le tiroir étant mobile par rapport au compartiment dans la direction transversale entre une position rentrée, dans laquelle le tiroir est disposé à l'intérieur du compartiment, et une position sortie, dans laquelle le tiroir est disposé au moins en partie en dehors du compartiment.

Suivant d'autres aspects avantageux de l'invention, le rack de stockage comprend une ou plusieurs des caractéristiques suivantes, prises isolément ou suivant toutes les combinaisons techniquement possibles :
- le rack s'étend dans une direction d'élévation perpendiculaire à la direction transversale, et, en projection dans un plan parallèle à la direction transversale et à la direction d'élévation, la direction d'allongement de chaque logement fait un angle compris entre 45° et 135° avec la direction transversale ; la direction d'allongement de chaque logement étant de préférence perpendiculaire à la direction transversale ; la direction d'allongement de chaque logement étant de préférence parallèle à la direction d'élévation ;
- le tiroir présente, lorsque le tiroir est dans la position sortie, un flanc d'accès aux logements du tiroir, le flanc d'accès étant propre à autoriser une opération de manutention du rack par un opérateur, l'opération de manutention comprenant le chargement d'un emport largable dans un des logements libres par le flanc d'accès et/ou le déchargement d'un emport largable stocké dans un des logements par le flanc d'accès ;
- le tiroir comprend un cadre et au moins une barrière, la barrière étant fixée au cadre du côté du tiroir opposé au côté du flanc d'accès, de sorte à s'opposer à une opération de manutention du côté opposé au flanc d'accès ;
- le tiroir est propre à être assemblé de manière réversible entre deux configurations de manutention distinctes, de sorte que les côtés respectifs des flancs d'accès du tiroir dans les configurations de manutention soient opposés l'un de l'autre ; le tiroir étant propre à passer, de préférence, d'une des configurations de manutention à l'autre par rotation du tiroir, par exemple de 180° par rapport à la direction transversale ;
- le module de stockage comprend un système de guidage du déplacement du tiroir par rapport au compartiment, le système de guidage comprend au moins un rail coulissant, chaque rail coulissant comprenant un élément mobile, fixé au tiroir, et un élément fixe, fixé au compartiment, les éléments fixe et mobile du rail coulissant coopérant l'un avec l'autre pour autoriser le déplacement du tiroir entre les positions sortie et rentrée ;
- le système de guidage est configuré pour que les éléments fixes présentent les mêmes positions respectives par rapport au compartiment dans les configurations de manutention et pour que, pour chaque élément mobile, l'élément fixe avec lequel coopère l'élément mobile dans une des configurations de manutention soit différent de l'élément fixe avec lequel l'élément mobile coopère dans l'autre des configurations ;
- le rack comprend un système de détection des emports largables stockés dans le rack, le système de détection comprenant :
   * pour chaque logement, un capteur de détection propre à acquérir une donnée représentative d'une présence ou d'une absence d'emport largable stocké dans le logement ; et
   * une unité de traitement connectée à chaque capteur de détection, l'unité de traitement étant configurée pour déterminer une information représentative d'une identification et/ou d'un comptage d'emports largables stockés dans le rack à partir des données acquises par chaque capteur de détection ; ladite information représentative comprenant de préférence une matrice de positions des emports largables stockés dans le rack, la matrice de positions étant représentative de la localisation de chaque logement stockant un emport largable ;
- le système de détection comprend, pour chaque module de stockage, un élément d'identification du module de stockage propre à être scanné, par un dispositif de lecture, pour obtenir ladite information déterminée par l'unité de traitement ; et/ou dans lequel le système de détection comprend, pour chaque module de stockage, un dispositif d'affichage connecté à l'unité de traitement, le dispositif d'affichage comprenant un écran et une unité de gestion d'affichage configurée pour afficher sur l'écran une représentation graphique de ladite information représentative déterminée par l'unité de traitement ;
- le rack comprend au moins deux modules de stockage, les modules de stockage étant agencés successivement les uns à la suite des autres dans une direction longitudinale du rack, la direction longitudinale étant perpendiculaire à la direction transversale et à la direction d'élévation ;
- les logements de chaque module de stockage présentent une même longueur de stockage d'emport, au moins deux des modules de stockage présentant des longueurs de stockage d'emport différentes ;
- un des modules est d'un premier type, présentant une première longueur de stockage d'emport, et un autre des modules est d'un deuxième type, présentant une deuxième longueur de stockage d'emport inférieure à la première longueur de stockage d'emport, au moins deux modules du deuxième type étant de préférence étagés dans la direction d'élévation ;
- le rack stocke des emports largables, chaque emport largable étant allongé suivant une direction d'allongement, chaque emport largable étant reçu dans un des logements de sorte que la direction d'allongement soit parallèle à la direction d'élévation ; et
- chaque emport largable stocké dans un des logements est une bouée portant au moins un capteur acoustique, un système de diffusion de marqueur, le marqueur étant par exemple un fumigène ou un marqueur colorant.

L'invention concerne également un aéronef comprenant au moins un rack de stockage tel que décrit ci-dessus.

L'invention apparaîtra plus clairement à la lecture de la description qui va suivre, donnée uniquement à titre d'exemple non limitatif, et faite en référence aux dessins dans lesquels :
[Fig. 1] la figure 1 est une vue de dessus d'un plan de cabine d'un aéronef destiné à la réalisation de missions de patrouille ;
[Fig. 2] la figure 2 est une vue schématique en perspective d'un premier mode de réalisation du rack de la figure 1 ;
[Fig. 3] la figure 3 est une vue schématique de côté du rack de la figure 2, prise selon la direction longitudinale du rack ;
[Fig. 4] la figure 4 est un organigramme schématique d'un système de détection du rack des figures 2 et 3 ; et
[Fig. 5] la figure 5 est une vue schématique de face d'un deuxième mode de réalisation du rack.

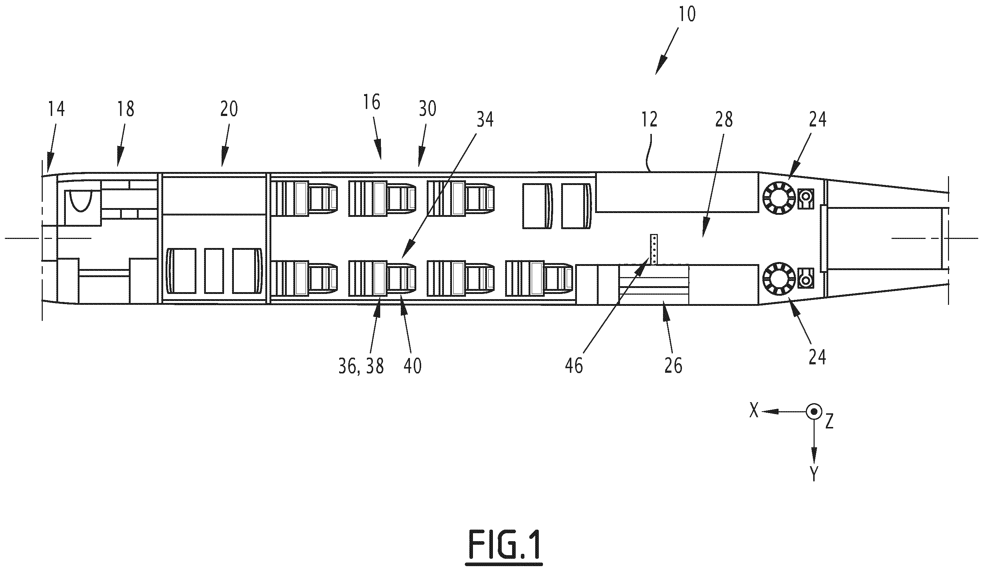

Un exemple d'aéronef 10 selon l'invention, destiné à effectuer des missions est illustré sur la figure 1.

D'une manière connue, l'aéronef 10 comporte un fuselage 12 délimitant intérieurement un cockpit 14 et une cabine 16, située à l'arrière du cockpit 14.

Le fuselage 12 délimite aussi intérieurement un espace d'entrée 18 de l'équipage et de préférence un espace de repos d'équipage 20.

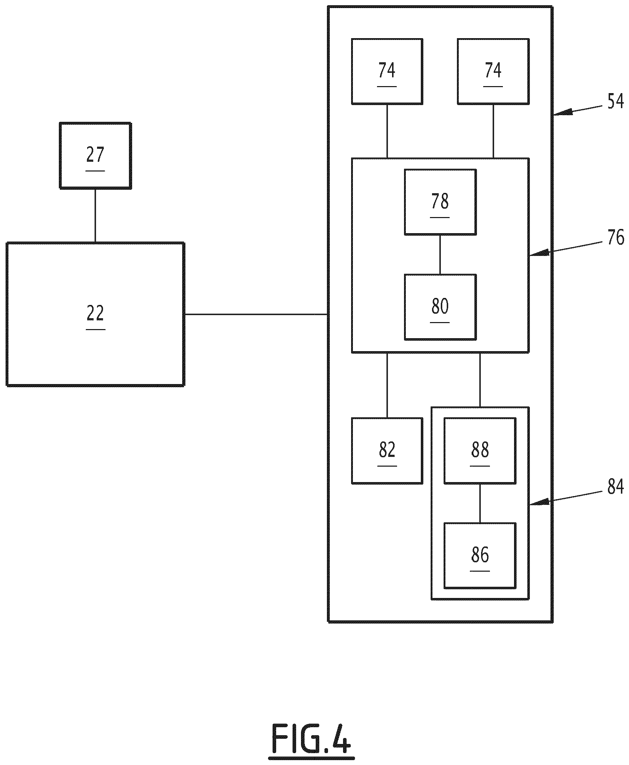

L'aéronef 10 comprend par exemple un système avionique 22 visible sur la figure 4.

L'aéronef 10 comprend en outre au moins un barillet de lancement 24 d'emports largables.

L'aéronef 10 comprend aussi au moins un rack de stockage 26.

L'aéronef 10 comprend un passage central de circulation 28 reliant le rack de stockage 26 aux barillets de lancement 24. Le passage central de circulation 28 se prolonge aussi vers l'avant de l'aéronef 10 dans la cabine 16.

Le cockpit 14 désigne l'espace réservé aux membres d'équipage formant le personnel navigant technique, tels que le pilote et le copilote.

Le cockpit 14 se trouve à l'avant du fuselage 12.

Il comporte de manière connue l'instrumentation destinée au pilotage et à la gestion de l'aéronef 10 et des sièges accueillant le pilote et le copilote.

L'espace d'entrée 18 comprend une porte latérale d'embarquement de l'équipage dans l'aéronef 10.

L'espace d'entrée 18 est disposé à l'arrière du cockpit 14.

Dans cet exemple, l'espace d'entrée 18 est interposé longitudinalement entre le cockpit 14 et la cabine 16, en particulier entre le cockpit 14 et l'espace de repos d'équipage 20.

L'espace d'entrée 18 et le cockpit 14 sont délimités entre eux par un élément de séparation avant.

L'espace de repos d'équipage 20 comprend une surface de repos sur laquelle un membre d'équipage de repos peut s'assoir et/ou s'allonger, pendant qu'un autre membre d'équipage reste de service.

La cabine 16 est destinée à accueillir l'équipage de l'aéronef 10 pendant une phase de vol au cours d'une mission de l'aéronef 10.

Dans la cabine 16, l'aéronef 10 comporte un système de mission 30 destiné à assister l'équipage de l'aéronef 10 dans la conduite de missions.

Les missions sont par exemple des missions de surveillance, de soutien à une force navale de surface ou sous-marine en support ou en protection, des missions de renseignement, notamment d'écoute, des missions de recherche et de sauvetage (« Search And Rescue » ou « SAR » en anglais), des missions de contrôle des pollutions, ou de police maritime, notamment dans le cadre de lutte contre les narcotrafiquants ou la piraterie et/ou des missions d'entrainement et de formation pour la régénération d'équipage.

Les missions sont destinées notamment à être effectuées dans un environnement de mission situé autour de l'aéronef 10. Elles comprennent généralement la détermination du positionnement d'acteurs présents dans l'environnement de mission, qui sont détectés sous forme de pistes.

Les pistes sont identifiées et suivies au moyen de capteurs embarqués 27 (visibles sur la figure 4) par l'aéronef 10 ou de capteurs non embarqués, tels que des capteurs formant des emports largables depuis l'aéronef 10, ou des capteurs portés par d'autres plateformes que l'aéronef 10, notamment des capteurs portés par des porteurs autonomes aériens, terrestres, ou maritimes (de surface ou sous-marin).

Les capteurs embarqués 27 comprennent par exemple au moins un capteur radar, un capteur optronique, un système acoustique, un capteur de détection d'anomalies magnétiques, un capteur de guerre électronique, un capteur d'écoute, un capteur de contre-mesure infrarouge ou/et un capteur de leurrage.

Les capteurs embarqués 27 sont connectés au système avionique 22 de l'aéronef 10.

Les capteurs portés par d'autres plateformes sont par exemple du même type que les capteurs embarqués 27 décrits ci-dessus.

La mise en œuvre de la mission requiert dans certains cas l'utilisation ou/et le largage d'emports largables 32 portés par l'aéronef 10.

Tout type d'emport largable est envisagé dans le cadre de l'invention. Quelques types d'emports largables 32 vont être décrits ci-dessous de manière non exhaustive et non limitative.

Au moins un des emports largables 32 est par exemple une bouée portant un capteur acoustique. Une telle bouée est destinée à être larguée dans une étendue d'eau pour effectuer de la détection acoustique, et à transmettre des informations de détection acoustique à l'aéronef 10. Une telle bouée est ainsi par exemple propre à communiquer avec un des capteurs embarqués 27. Une telle bouée permet alors notamment le positionnement d'un des acteurs présents dans l'environnement de mission et la détection et le suivi d'une piste associée.

En variante ou en complément, au moins un des emports largables 32 est par exemple un système de diffusion de marqueur, pour le suivi d'acteurs en surface et d'acteurs sous-marin. Le marqueur est de préférence un fumigène ou un marqueur colorant, le marqueur colorant contenant par exemple de la fluorescéine. Un tel marqueur permet alors notamment le positionnement d'un des acteurs présents dans l'environnement de mission et la détection et le suivi d'une piste associée.

Le système de mission 30 de l'aéronef 10 comporte une pluralité de consoles 34 disposées dans la cabine 16.

Chaque console 34 comporte un support portant une interface homme machine 36 et un écran de suivi tactique 38, destiné à l'affichage d'une visualisation de suivi tactique élaborée à partir de données recueillies par les capteurs.

La visualisation de suivi tactique comprend par exemple des données représentatives des emports largables 32 qui ont déjà été largués au cours de la mission.

Chaque console 34 comporte en outre un calculateur de gestion de console, et un gestionnaire d'affichage sur l'interface 36 et sur l'écran de suivi tactique 38, destiné respectivement à engendrer et à afficher les fenêtres d'affichage présentées à l'opérateur de la console 34, respectivement sur l'interface 36 et sur l'écran de suivi tactique 38.

Chaque console 34 comprend aussi un siège 40 destiné à être placé en regard du support portant l'interface 36, l'écran de suivi tactique 38 et le périphérique pour permettre à un opérateur d'interagir avec ces éléments de la console 34.

Le siège 40 est muni d'une assise sur laquelle l'opérateur est placé, lorsqu'il opère la console 34.

Dans l'exemple de la figure 1, l'aéronef 10 comprend aux moins deux barillets de lancement 24 d'emports largables. Les barillets de lancement 24 sont alors par exemple disposés de part et d'autre du passage central de circulation 28.

Chaque barillet de lancement 24 est par exemple disposé à l'arrière de l'aéronef 10 par rapport au rack de stockage 26. En variante, tout autre aménagement est possible, par exemple chaque barillet de lancement 24 disposé à l'avant par rapport au rack 26.

Chaque barillet de lancement 24 est configuré pour autoriser le largage des emports 32 à l'extérieur de l'aéronef 10, notamment au cours d'une phase de vol d'une mission de l'aéronef 10.

Chaque barillet de lancement 24 comprend pour ce faire un conduit de largage, dans lequel un opérateur est propre à placer un des emports largables 32.

Chaque barillet de lancement 24 comprend aussi un actionneur propre à déclencher le largage de l'emport largable 32 qui est placé dans le conduit de largage.

Dans l'exemple de la figure 1, l'aéronef 10 comprend un unique rack de stockage 26. En variante, l'aéronef 10 en comprend au moins deux, par exemple disposés du même côté du fuselage 12 ou disposés à l'opposé du fuselage 12 les uns des autres.

Le rack de stockage 26 est destiné à stocker des emports largables 32 dans le cadre de la mission de l'aéronef 10.

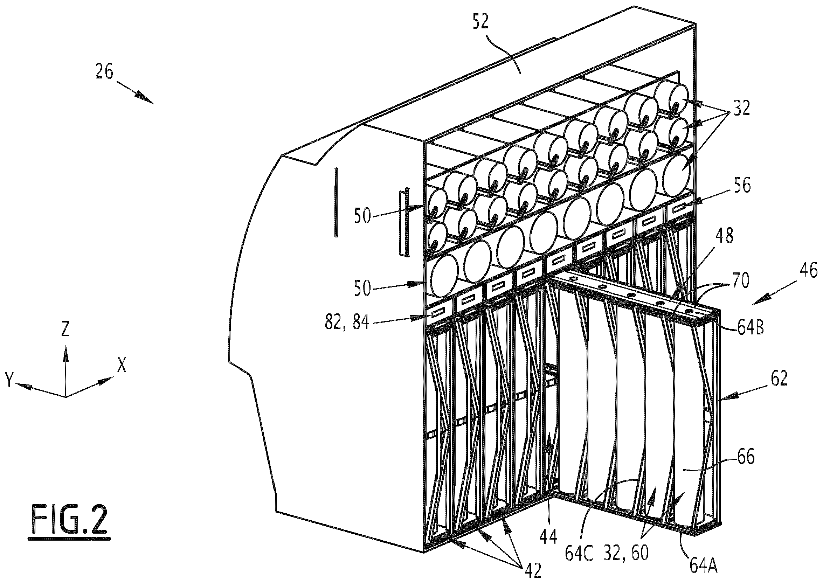

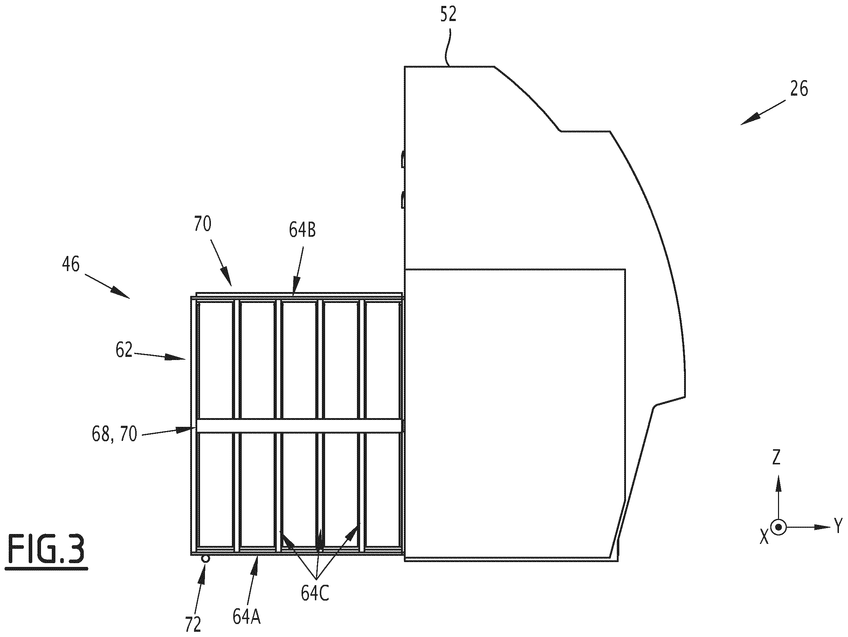

Un premier mode de réalisation du rack de stockage 26 est illustré plus en détails sur les figures 2 et 3.

Ici et par la suite, on définit pour le rack de stockage 26 une direction d'élévation Z, une direction longitudinale X perpendiculaire à la direction d'élévation Z, et une direction transversale Y perpendiculaire aux directions longitudinale X et d'élévation Z.

La direction d'élévation Z est typiquement perpendiculaire au plan de roulement de l'aéronef 10, lorsque le rack 26 est intégré dans l'aéronef 10 et que l'aéronef 10 est au contact du sol. La vue de la figure 1 est ainsi en particulier prise perpendiculairement à la direction d'élévation Z.

La direction longitudinale X est par exemple parallèle à la direction d'avancement de l'aéronef 10, lorsque le rack 26 est intégré dans l'aéronef 10 et que l'aéronef 10 est au contact du sol. Dans le cadre de l'exemple de la figure 1, l'avant et l'arrière de l'aéronef 10 s'entendent par rapport à la direction longitudinale X.

Le rack 26 est par exemple disposé à l'arrière de l'aéronef 10 par rapport aux consoles 34.

Le rack 26 est disposé à proximité du ou d'au moins un des barillet(s) de lancement 24. Le rack 26 est par exemple disposé dans un même compartiment cabine que le barillet de lancement 24 sans séparation physique, par exemple de type cloison.

Le rack 26 est disposé contre le fuselage 12.

Le rack de stockage 26 comprend au moins un module de stockage 42.

Dans l'exemple de la figure 2, le rack de stockage 26 comprend en outre au moins une chambre additionnelle 50 de stockage d'emports à l'horizontal.

Le rack 26 comprend aussi par exemple un boitier 52 recevant chaque module de stockage 42, et, le cas échéant, chaque chambre additionnelle 50.

Le rack 26 comprend aussi de préférence un système de détection 54 des emports largables 32 stockés dans le rack 26.

Tout type d'emport largable 32 est considéré dans le cadre de l'invention.

Chaque emport largable 32 est par exemple choisi parmi les types définis ci-dessus.

Chaque emport largable 32 est ainsi de préférence une bouée portant au moins un capteur acoustique, un système de diffusion de marqueur, le marqueur étant par exemple un fumigène ou un marqueur colorant.

Chaque emport largable 32 est conditionné pour présenter une enveloppe extérieure, dont les dimensions sont inscrites dans un cylindre de révolution. Les dimensions de l'enveloppe extérieure dépendent du type d'emport largable 32 considéré.

Sur les figures, les emports largables 32 sont ainsi illustrés sous forme de tels cylindres de révolution.

Chaque emport largable 32 est ainsi allongé suivant une direction d'allongement. Le cylindre de révolution dans lequel s'inscrit les dimensions de l'enveloppe extérieure présente un axe central parallèle à la direction d'allongement.

Le boitier 52 du rack de stockage 26 est fixé à l'aéronef 10.

Le boitier 52 présente de préférence une forme extérieure épousant la surface intérieure du fuselage 12 de l'aéronef 10.

Dans le mode de réalisation préféré illustré, le rack de stockage 26 comprend au moins deux modules de stockage 42.

L'homme du métier comprendra que le nombre de module(s) de stockage 42 dépend des règles de certification et des dimensions disponibles pour le rack 26 dans la cabine 16.

De préférence, le rack de stockage 26 comprend au moins trois, mieux au moins quatre, mieux au moins cinq, modules de stockage 42. Dans l'exemple de la figure 2, le rack comprend neuf modules de stockage 42. Les modules de stockage 42 sont alors agencés successivement les uns à la suite des autres dans la direction longitudinale X.

Dans une autre variante non illustrée, le rack de stockage 26 ne comprend qu'un unique module de stockage 42. Dans tout ce qui suit, l'expression « chaque module » fait alors référence à l'unique module et est alors synonyme de « le module ».

Chaque module de stockage 42 comprend un compartiment 44 et un tiroir 46, le tiroir 46 étant mobile par rapport au compartiment 44.

Chaque module 42 comprend aussi un système de guidage 48 du déplacement du tiroir 46 par rapport au compartiment 44.

Chaque module 42 présente une façade 56, prise dans une vue selon la direction transversale Y.

Le compartiment 44 de chaque module de stockage 42 est reçu dans le boitier 52 et est fixé au boitier 52.

Le compartiment 44 comprend au moins une cloison supérieure et une cloison inférieure. De plus, le compartiment 44 comprend de préférence deux cloisons latérales.

Lesdites cloisons du compartiment 44 délimitent ainsi un espace de réception propre à recevoir le tiroir 46.

La cloison supérieure est de préférence plane et s'étend par exemple perpendiculairement à la direction d'élévation Z. La cloison inférieure est de préférence plane et s'étend par exemple perpendiculairement à la direction d'élévation Z.

Chaque cloison latérale joint la cloison inférieure à la cloison supérieure.

Les compartiments 44 de deux modules de stockage 42 successifs partagent par exemple une même cloison latérale, qui délimite de part et d'autre l'espace de réception des compartiments 44.

Chaque cloison latérale est de préférence plane et s'étend par exemple perpendiculairement à la direction longitudinale X.

Chaque cloison est par exemple pleine, sans ajour.

Chaque cloison est par exemple réalisée en métal, tel qu'en aluminium, et/ou en matériau composite.

Comme illustré sur les figures 2 et 3, le tiroir 46 délimite au moins deux logements de stockage 60 d'emports largables 32.

De préférence, le tiroir 46 comprend au moins trois, mieux au moins quatre, mieux au moins cinq, logements de stockage 60 d'emports largables 32. Dans l'exemple de la figure 2, le tiroir 46 comprend cinq logements de stockage 60.

L'homme du métier comprendra que le nombre de logements 60 par tiroir 46 dépend des règles de certification et des dimensions disponibles pour le rack 26 dans la cabine 16.

Comme illustré sur les figures 2 et 3, les logements 60 sont agencés successivement les uns à la suite des autres dans la direction transversale Y.

Le tiroir 46 comprend de préférence un cadre 62 délimitant les logements 60.

Le cadre 62 est par exemple réalisé en métal, tel qu'en aluminium, et/ou en matériau composite.

Le cadre 62 comprend de préférence, pour chaque logement 60, une paroi inférieure de support 64A agencé pour supporter le poids d'un emport largable 32 stocké dans le logement 60.

La paroi inférieure de support 64A est par exemple pleine.

Le cadre 62 comprend aussi de préférence, pour chaque logement 60, une paroi supérieure 64B, agencée au-dessus de la paroi inférieure de support 64A dans la direction d'élévation Z.

La paroi supérieure 64B est par exemple pleine.

Le cadre 62 comprend de préférence au moins une séparation 64C, chaque séparation 64C délimitant deux à deux les logements 60.

Chaque séparation 64C joint la paroi inférieure de support 64A à la paroi supérieure 64B. Chaque séparation 64C est par exemple fixée à la paroi inférieure de support 64A et/ou à la paroi supérieure 64B du tiroir 46.

Chaque séparation 64C est propre à empêcher le passage d'un emport largable 32 entre les deux logements 60 délimités par la séparation 64C.

Chaque séparation 64C est de préférence alvéolée. En d'autres termes, chaque séparation 64C est alors ajourée.

Chaque logement 60 est dimensionné pour recevoir un des emports largables 32. De préférence, chaque logement 60 du même tiroir 46 est configuré pour stocker le même type d'emport largable 32.

En particulier, chaque logement 60 présente un volume intérieur propre à recevoir l'emport 32. Le volume intérieur est délimité au moins par les séparations 64C, la paroi inférieure de support 64A et la paroi supérieure 64B du tiroir 46.

Chaque logement 60 est allongé selon une direction d'allongement.

Chaque emport largable 32 est propre à être reçu dans un des logements 60, en particulier dans le volume intérieur, de sorte que la direction d'allongement de l'emport largable 32 soit parallèle à la direction d'allongement du logement 60.

Chaque logement 60 présente ainsi une longueur de stockage d'emport, prise selon la direction d'allongement des logements 60 du tiroir 46.

La longueur de stockage d'emport correspond en particulier à la dimension maximale, prise selon la direction d'allongement, du volume intérieur défini par le logement 60. Il s'agit en particulier de la distance, prise selon la direction d'allongement, entre la paroi inférieure de support 64A et la paroi supérieure 64B du tiroir 46.

Les logements 60 du tiroir 46 présentent la même longueur de stockage d'emport. Dans le premier mode de réalisation, tous les modules de stockage 42 du rack présentent par exemple la même longueur de stockage d'emport.

La longueur de stockage d'emport de chaque tiroir 46 est par exemple supérieure ou égale à 20 cm.

Les directions d'allongement de chaque logement 60 du tiroir 46 sont parallèles.

La direction d'allongement de chaque logement 60 du tiroir 46 est non parallèle à la direction transversale Y. Une telle orientation permet d'assurer une bonne capacité de stockage, dans la mesure où plusieurs emports peuvent être stockés les uns à la suite des autres dans la direction transversale Y.

De préférence, en projection dans un plan parallèle à la direction transversale Y et à la direction d'élévation Z, la direction d'allongement de chaque logement 60 du tiroir 46 fait un angle compris entre 45° et 135° avec la direction transversale Y.

La direction d'allongement de chaque logement 60 du tiroir 46 est avantageusement perpendiculaire à la direction transversale Y, ledit angle étant alors de 90°.

La direction d'allongement de chaque logement 60 du tiroir 46 est non parallèle à la direction longitudinale X. De préférence, en projection dans un plan parallèle à la direction longitudinale X et à la direction d'élévation Z, la direction d'allongement de chaque logement 60 du tiroir 46 fait un angle compris entre 70° et 110° avec la direction longitudinale X.

La direction d'allongement de chaque logement 60 du tiroir 46 est avantageusement perpendiculaire à la direction longitudinale X, ledit angle étant alors de 90°.

Dans l'exemple préféré illustré, la direction d'allongement de chaque logement 60 du tiroir 46 est de préférence parallèle à la direction d'élévation Z. Une telle orientation des logements 60 permet une manutention plus ergonomique, en évitant de faire pivoter l'opérateur lors du chargement ou déchargement des emports.

Comme illustré sur les figures 2 et 3, le tiroir 46 est mobile par rapport au compartiment 44 dans la direction transversale Y entre une position rentrée, dans laquelle le tiroir 46 est disposé à l'intérieur du compartiment 44, et une position sortie, dans laquelle le tiroir 46 est disposé au moins en partie en dehors du compartiment 44.

Sur la figure 2, un seul des tiroirs 46 du rack 26 est illustré en position sortie, alors que tous les autres sont illustrés en position rentrée.

Dans la position rentrée, le tiroir 46 est de préférence entièrement reçu dans l'espace de réception du compartiment 44, sans dépasser du compartiment 44, en particulier sans dépasser de la façade 56 du module de stockage 42.

Dans la position sortie, tous les logements 60 du tiroir 46 sont avantageusement accessibles à un opérateur.

Afin de permettre une opération de manutention du rack par un opérateur comprenant le chargement d'un emport largable 32 dans un des logements 60 libres, et/ou le déchargement d'un emport largable 32 déjà stocké dans un des logements 60, le tiroir 46 présente, dans la position sortie, un flanc d'accès 66 aux logements 60 du tiroir 46 (visible sur la figure 2).

Le flanc d'accès 66 autorise l'accès aux logements 60 par un opérateur et autorise alors l'opération de manutention par l'opérateur.

Le flanc d'accès 66 est de préférence disposé du côté du tiroir 46 qui est en regard du barillet de lancement 24.

Le flanc d'accès 66 s'étend notamment perpendiculairement à la direction longitudinale X.

Du côté du flanc d'accès 66, le tiroir 46 est ainsi par exemple dépourvu de toute barrière ou obstacle s'opposant à une manutention d'emports largables 32 par le flanc d'accès 66, et ceci de préférence sur toute la longueur des logements 60, prise dans leur direction d'allongement.

A l'inverse, il n'est de préférence pas possible de charger ou décharger les emports largables 32 du côté opposé au flanc d'accès 66.

Le tiroir 46 comprend ainsi de préférence au moins une barrière 68, fixée au cadre 62 du côté du tiroir 46 opposé au côté du flanc d'accès 66. Dans un exemple non illustré, le tiroir 46 comprend au moins deux barrières 68 fixées au cadre 62 du côté du tiroir 46 opposé au côté du flanc d'accès 66.

La barrière 68 est visible sur la figure 3. Le côté du tiroir 46 visible sur la figure 3 est donc le côté opposé au flanc d'accès 66.

Les côtés considérés ici sont les côtés de part et d'autre du tiroir 46 dans la direction longitudinale X.

La barrière 68 s'oppose à l'accès des logements 60 par l'opérateur du côté du tiroir 46 opposé au côté du flanc d'accès 66. La barrière 68 s'oppose en particulier à toute opération de manutention d'emports largables 32 du côté de la barrière 68.

La barrière 68 est fixée au cadre 62 latéralement aux logements 60 du tiroir 46. En particulier, la barrière 68 est en regard des cloisons latérales du compartiment 44 lorsque le tiroir 46 est en position rentrée.

La barrière 68 retient en outre un emport largable 32 stocké dans le logement 60. La barrière 68 délimite ainsi aussi le volume intérieur du logement 60.

Par exemple, la barrière 68 est disposée dans au moins une région du tiroir 46 agencée entre 30% et 70% de la longueur de stockage d'emport, prise à partir de la paroi inférieure de support 64A dans la direction d'allongement.

De préférence, la région est agencée entre 40% et 60% de la longueur de stockage d'emport, prise à partir de la paroi inférieure de support 64A dans la direction d'allongement.

Avantageusement, la barrière 68 est disposée à mi-hauteur de la longueur de stockage d'emport du logement 60.

Par exemple, la barrière 68 s'étend de manière sensiblement parallèle à la direction transversale Y.

Dans un mode de réalisation préféré, le module 42 est propre à changer le côté de chargement et de déchargement des emports largables 32 dans le tiroir 46.

Le tiroir 46 est ainsi propre à être assemblé au compartiment 44 de manière réversible entre deux configurations de manutention distinctes du module 42, de sorte que les côtés respectifs des flancs d'accès du tiroir 46 dans les configurations de manutention soient opposés l'un de l'autre.

Toute réversibilité est envisagée dans le cadre de l'invention. De préférence, le tiroir 46 est propre à passer d'une des configurations de manutention à l'autre, par rotation du tiroir 46, par exemple de 180° par rapport à la direction transversale Y. Le tiroir 46 est alors dans ce cas retourné pour passer d'une des configurations à l'autre.

Le côté du flanc d'accès 66 dans une des configurations de manutention correspond au côté de la barrière 68 dans l'autre des configurations de manutention.

Tous les tiroirs 46 du rack 26 sont assemblés de préférence dans la même configuration de manutention.

Le module 42 permet une réversibilité du tiroir 46 de façon symétrique par rapport à un plan perpendiculaire à la direction longitudinale X.

Plus précisément, en fonction de la position des barillets de lancement 24 dans l'aéronef 10, une interchangeabilité du flanc d'accès 66 permettant le chargement/déchargement des emports 32 est possible. Cela simplifie et homogénéise la fabrication du rack 26 et permet une adaptation à tout type de plan de l'aéronef 10 ou à tout changement de ce plan au cours de la vie de l'aéronef 10.

Le tiroir 46 comprend, pour chaque logement 60, un système de maintien en position d'un emport largable 32 reçu dans le logement 60 (non illustré sur les figures). Le système de maintien en position est configuré pour s'opposer à tout mouvement de l'emport largable 32 par rapport au logement 60 dans lequel il est reçu, lors d'un déplacement du tiroir 46.

Tout système de maintien en position est envisagé dans le cadre de l'invention.

Le système de maintien en position comprend par exemple une sangle, par exemple une sangle clipsable.

Le système de maintien en position comprend par exemple une mousse de protection propre à accueillir l'emport 32.

Tout système de guidage 48 est envisagé dans le cadre de l'invention.

Pour permettre le déplacement du tiroir 46 par rapport au compartiment 44, le système de guidage 48 comprend de préférence au moins un rail coulissant 70.

De préférence, le système de guidage 48 comprend au moins deux rails coulissants 70. De préférence, le système de guidage 48 comprend au moins trois, mieux au moins quatre, mieux au moins cinq, rails coulissants 70. Dans l'exemple de la figure 2, le tiroir 46 comprend cinq rails coulissants 70.

Tout nombre de rail(s) coulissant(s) 70 est envisagé, l'homme du métier adaptera ce nombre en fonction du besoin.

Chaque rail coulissant comprend un élément, désigné par la suite sous les termes « élément mobile », fixé au tiroir 46.

Chaque rail coulissant comprend un autre élément, désigné par la suite sous les termes « élément fixe », fixé du compartiment 44.

L'élément fixe du rail coulissant est par exemple fixé à l'une des cloisons du compartiment 44.

L'élément mobile du rail coulissant est par exemple fixé au cadre 62 du tiroir 46.

Les éléments fixe et mobile du rail coulissant coopèrent l'un avec l'autre pour autoriser le déplacement du tiroir 46 entre les positions sortie et rentrée. L'élément mobile est ainsi mobile par coulissement par rapport à l'élément fixe du rail coulissant.

Chaque rail coulissant s'étend ainsi dans la direction transversale Y.

Dans l'exemple illustré, les éléments fixe et mobile du rail coulissant sont des profilés.

Un des éléments fixe et mobile du rail coulissant a par exemple un profil femelle, l'autre ayant un profil male complémentaire. Le profil correspond à la forme extérieure d'une section de l'élément, perpendiculaire à la direction transversale Y.

Au moins un des rails coulissants 70 est un rail coulissant supérieur disposé au-dessus de chaque logement 60 du tiroir 46 dans la direction d'élévation Z. De préférence, au moins deux des rails coulissants 70 sont disposés ainsi. L'élément fixe du rail coulissant supérieur est alors fixé à la cloison supérieure du compartiment 44.

En variante ou en complément, au moins un des rails coulissants 70 est un rail coulissant inférieur disposé en dessous de chaque logement 60 du tiroir 46 dans la direction d'élévation Z. De préférence, au moins deux des rails coulissants 70 sont disposés ainsi. L'élément fixe du rail coulissant inférieur est alors fixé à la cloison inférieure du compartiment 44.

De préférence, au moins un des rails coulissants 70 est un rail coulissant latéral disposé latéralement par rapport aux logements 60 du tiroir 46. L'élément fixe du rail coulissant latéral est alors fixé à une des cloisons latérales du compartiment 44.

Dans l'exemple illustré, le système de guidage 48 comprend deux rails coulissants supérieurs disposés au-dessus de chaque logement 60 du tiroir 46, deux rails coulissants inférieurs disposés en dessous de chaque logement 60 du tiroir 46, et un rail coulissant 70 latéral disposé latéralement par rapport aux logements 60 du tiroir 46.

Dans un mode de réalisation préféré illustré, la barrière 68 ci-dessus est formée au moins par l'élément mobile du rail coulissant latéral 70. Par exemple, la barrière 68 ci-dessus est formée uniquement par ledit élément mobile.

Dans le mode de réalisation préféré où le module 42 est propre à changer le côté de chargement et de déchargement des emports largables 32, , le système de guidage 48 est configuré pour assurer ladite réversibilité de l'assemblage du tiroir 46, en particulier lors de la rotation du tiroir 46 de 180° par rapport à la direction transversale Y.

Le système de guidage 48 est configuré pour que les éléments fixes présentent les mêmes positions respectives par rapport au compartiment 44 dans les configurations de manutention. Les éléments fixes restent immobiles en position lors du passage du tiroir 46 entre les configurations de manutention.

Le système de guidage 48 est configuré pour que, pour chaque élément mobile, l'élément fixe avec lequel coopère l'élément mobile dans une des configurations de manutention soit différent de l'élément fixe avec lequel il coopère dans l'autre des configurations.

Le système de guidage 48 est configuré pour que chaque élément mobile formant le ou un des rails coulissants supérieurs, dans une des configurations de manutention, forme le ou un des rails coulissants inférieurs dans l'autre des configurations de manutention.

Le système de guidage 48 est de même configuré pour que chaque élément mobile formant le ou un des rails coulissants inférieurs, dans une des configurations de manutention, forme le ou un des rails coulissants supérieurs dans l'autre des configurations de manutention.

Le système de guidage 48 est aussi configuré pour que chaque élément mobile formant le ou un des rails coulissants latéraux, dans une des configurations de manutention, forme aussi le ou un des rails coulissants latéraux dans l'autre des configurations de manutention.

Pour ce faire, de préférence, le système de guidage 48 comprend alors, dans chaque configuration de manutention, au moins un élément fixe en attente fixé au compartiment 44 et disposé du côté du flanc d'accès de la configuration.

L'élément fixe en attente ne coopère avec aucun élément mobile.

L'élément fixe en attente est fixé à la cloison latérale du compartiment 44 du côté du flanc d'accès.

Ainsi, lorsque le module 42 passe d'une configuration de manutention de départ à une configuration de manutention d'arrivée, chaque élément fixe en attente dans la configuration de manutention de départ forme le ou un des rails coulissants latéraux dans la configuration de manutention d'arrivée. Inversement, chaque élément fixe formant le ou un des rails coulissants latéraux dans la configuration de manutention de départ, devient un élément fixe en attente dans la configuration de manutention d'arrivée.

De plus, le système de guidage 48 comprend par exemple une poignée de tirage (non illustrée) propre à être saisie par un opérateur pour faire passer le tiroir 46 d'une des positions à l'autre.

La poignée de tirage est fixée au cadre 62.

L'opérateur est propre à déplacer le tiroir 46 de la position rentrée à la position sortie en tirant sur la poignée dans la direction transversale Y.

Le système de guidage 48 comprend de préférence une butée d'arrêt sortie et une butée d'arrêt rentrée (non illustrées).

Le tiroir 46 est alors dans la position sortie lorsque le tiroir 46 est en butée contre la butée d'arrêt sortie du compartiment 44, et est dans la position rentrée lorsque le tiroir 46 est en butée contre la butée d'arrêt rentrée du compartiment 44.

Les butées sont par exemple solidaires du compartiment 44.

Le système de guidage 48 comprend aussi de préférence un amortisseur de fin de course du tiroir 46 (non illustré).

L'amortisseur de fin de course du tiroir 46 est configuré pour amortir un déplacement du tiroir 46 par rapport au compartiment 44, par exemple lorsque le tiroir 46 atteint la position sortie et/ou la position rentrée.

L'amortisseur de fin de course est par exemple solidaire du compartiment 44.

Le système de guidage 48 comprend par exemple au moins une roulette 72, propre à toucher un plancher de l'aéronef 10.

Chaque roulette 72 est alors fixée au cadre 62 du tiroir 46, par exemple fixée en dessous de la paroi inférieure de support 64A, dans la direction d'élévation Z.

Une telle roulette 72 réduits les effets de moments sur les rails coulissants 70, et réduit le porte à faux induit par la masse des emports 32 stockés dans le tiroir 46, en position sortie.

Le système de détection 54 est destiné à fournir, à un opérateur, des informations en lien avec les emports largables 32 stockés dans le tiroir 46 du module 42.

Comme illustré sur la figure 4, le système de détection 54 comprend, pour chaque logement 60, un capteur de détection 74 propre à acquérir une donnée représentative d'une présence ou d'une absence d'emport largable 32 stocké dans le logement 60.

Tout type de capteur de détection 74 est envisagé.

Chaque capteur de détection 74 est par exemple capacitif.

A titre d'exemple, sur la figure 4, seuls deux capteurs de détection 74 sont illustrés.

Le système de détection 54 comprend aussi une unité de traitement 76 connectée à chaque capteur de détection 74.

L'unité de traitement 76 comprend par exemple une mémoire 78 et un processeur 80 associé à la mémoire 78. Dans un exemple de réalisation, les fonctions de l'unité de traitement 76 décrites par la suite sont réalisées sous forme d'un logiciel, c'est-à-dire sous forme d'un produit programme d'ordinateur, stockée dans la mémoire 78 et exécutable par le processeur 80.

La mémoire 78 est par exemple un medium apte à mémoriser des instructions électroniques. A titre d'exemple, la mémoire 78 est un disque optique, un disque magnéto-optique, une mémoire ROM, une mémoire RAM, tout type de mémoire non-volatile (par exemple FLASH ou NVRAM) ou une carte magnétique.

En variante, les fonctions de l'unité de traitement 76 décrites par la suite sont réalisées sous forme d'un composant logique programmable, tel qu'un FPGA (de l'anglais Field Programmable Gate Array), ou encore d'un circuit intégré, tel qu'un ASIC (de l'anglais Application Specific Integrated Circuit).

L'unité de traitement 76 est configurée pour déterminer une information représentative d'une identification et/ou d'un comptage d'emports largables 32 stockés dans le rack à partir des données acquises par chaque capteur de détection 74.

Il est ainsi possible d'avoir un comptage en temps réel des emports 32 stockés et de savoir la localisation de chacun au sein du rack 26, bien que ces emports 32 ne soient pas immédiatement visibles par l'opérateur dans les positions rentrées des tiroirs 46.

L'unité de traitement 76 est de préférence propre à être raccordée au système avionique 22 de l'aéronef 10 et à envoyer au système avionique 22 ladite information représentative déterminée.

L'unité de traitement 76 est de préférence propre à stocker une cartographie des capteurs de détection 74, par exemple dans la mémoire 78.

De préférence, ladite information représentative comprend une matrice de positions des emports largables 32 stockés dans le rack. La matrice de positions est alors représentative de la localisation de chaque logement 60 stockant un emport largable 32.

La matrice de positions est déterminée en fonction de la cartographie stockée et de chaque donnée acquise par les capteurs de détection.

La matrice de positions comprend alors par exemple, pour chaque logement 60 de chaque module 42, une donnée représentative de la position correspondante au sein du rack 26 et la donnée acquise représentative d'une présence ou d'une absence d'emport largable 32 stocké dans le logement 60.

De préférence, le système de détection 54 est configuré pour fournir ladite information déterminée à un opérateur.

Pour ce faire, le système de détection 54 comprend par exemple, pour chaque module de stockage 42, un élément d'identification 82 propre au module 42.

L'élément d'identification 82 comprend par exemple un code-barres à deux dimensions, par exemple un code QR (en anglais « QR code » pour « quick response code »).

L'élément d'identification 82 est propre à être scanné, par un dispositif de lecture, pour obtenir ladite information déterminée par l'unité de traitement 76.

L'élément d'identification 82 est disposé au niveau de la façade 56 du module de stockage 42. L'élément d'identification 82 est disposé par exemple au-dessus du compartiment 44 du module de stockage 42 dans la direction d'élévation Z.

En variante ou en complément, le système de détection 54 comprend par exemple, pour chaque module de stockage 42, un dispositif d'affichage 84 connecté à l'unité de traitement 76.

Le dispositif d'affichage 84 comprend un écran 86 et une unité de gestion d'affichage 88 configurée pour afficher sur l'écran 86 une représentation graphique de ladite information représentative déterminée par l'unité de traitement 76.

L'unité de gestion d'affichage 88 comprend par exemple un processeur graphique et une mémoire graphique associée. Le processeur graphique est adapté pour traiter une information stockée dans la mémoire graphique et réaliser l'affichage sur l'écran 86 de la représentation graphique.

L'écran 86 est par exemple disposé au niveau de la façade 56 du module de stockage 42. L'écran 86 est disposé par exemple au-dessus du compartiment 44 du module de stockage 42 dans la direction d'élévation Z.

Le rack 26 selon l'invention peut aussi de préférence stocker des emports à l'horizontale.

Dans le mode de réalisation préféré illustré, le rack de stockage 26 comprend au moins deux chambres additionnelles 50 de stockage d'emports à l'horizontale. En variante, le rack n'en comprend qu'une unique ou en est dépourvu.

Chaque chambre additionnelle 50 est par exemple disposée au-dessus de chacun des modules de stockage 42 du rack, dans la direction d'élévation Z.

Les chambres additionnelles 50 sont agencées par exemple superposées dans la direction d'élévation Z.

Chaque chambre additionnelle 50 est reçue dans le boitier 52.

Chaque chambre additionnelle 50 comprend au moins une cloison supérieure et une cloison inférieure. De plus, chaque chambre additionnelle 50 comprend de préférence deux cloisons latérales. Chaque chambre additionnelle 50 comprend un fond.

Lesdites cloisons et le fond de la chambre additionnelle 50 délimitent ainsi un espace de réception propre à recevoir au moins un emport largable 32.

De préférence, chaque chambre additionnelle 50 est propre à recevoir au moins deux emports largables 32 dans l'espace de réception.

Chaque emport largable 32 est propre à être stocké dans la chambre additionnelle 50, de sorte que la direction d'allongement de l'emport largable 32 soit parallèle à la direction transversale Y.

Comme illustré sur la figure 2, les emports largables 32 stockés dans la chambre additionnelle 50 sont agencés successivement les uns à la suite des autres dans la direction longitudinale X.

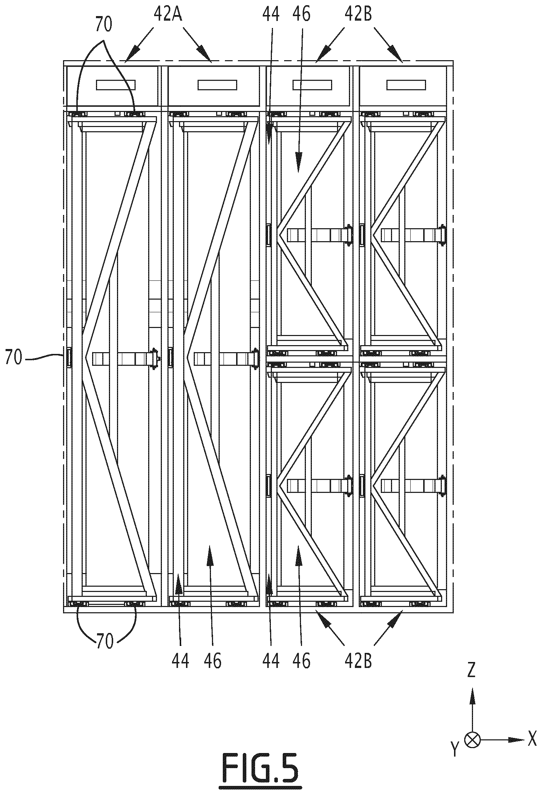

Un deuxième mode de réalisation du rack selon l'invention va maintenant être décrit en référence à la figure 5. Seules les différences entre les premier et deuxième modes seront décrits par la suite.

Dans le deuxième mode de réalisation, le rack présente une pluralité d'options de stockage capable de stocker différents types d'emports largables 32 présentant des dimensions différentes, notamment des longueurs maximales différentes prises selon leurs directions d'allongement propres.

Le rack comprend alors au moins deux modules de stockage 42A, 42B et de préférence au moins trois modules 42A, 42B comme illustré.

Dans le deuxième mode de réalisation, au moins deux des modules de stockage 42A, 42B présentent des longueurs de stockage d'emport respectives différentes.

Plus précisément, un des modules est d'un premier type 42A, présentant une première longueur de stockage d'emport, et un autre des modules est d'un deuxième type 42B, présentant une deuxième longueur de stockage d'emport inférieure à la première longueur de stockage d'emport.

De préférence, la deuxième longueur de stockage d'emport est inférieure ou égale à 90%, avantageusement inférieure ou égale à 60%, par exemple inférieure ou égale à 50%, de la première longueur de stockage d'emport.

Dans l'exemple préféré de la figure 5, le rack 26 permet un étagement des modules.

Le rack 26 comprend alors au moins deux modules du deuxième type 42B.

Les deux modules du deuxième type 42B sont étagés. Les deux modules du deuxième type 42B sont ainsi superposés l'un sur l'autre dans la direction d'élévation Z.

Les deux modules du deuxième type 42B sont agencés à la suite du module du premier type 42A, dans la direction longitudinale X.

De préférence, le tiroir 46 du module du premier type 42A s'étend sur toute la hauteur, prise selon la direction d'élévation Z, des tiroirs 46 des deux modules étagés du deuxième type 42B.

Dans l'exemple de la figure 5, le rack 26 comprend au moins quatre modules du deuxième type 42B, les modules du deuxième type 42B formant des couples étagés deux à deux. Les couples de modules du deuxième type 42B sont agencés successivement les uns à la suite des autres dans la direction longitudinale X.

En variante non illustré, le rack 26 comprend des modules d'au moins trois type, présentant chacun des longueurs de stockage d'emport respectives différentes.

L'homme du métier comprendra que le nombre de types de module, le nombre de module(s) de chaque type, et la longueur de stockage d'emport de chaque type varieront en fonction des besoins de mission en vol.

Grâce aux caractéristiques précédemment décrites, le rack de stockage 26 stocke tout type d'emport largable 32, avec une bonne capacité de stockage, et un encombrement faible.

Le rack est en outre adaptable en fonction des règles de certification de passages ou des contraintes dimensionnelles de l'aéronef 10.

## Revendications

1. Rack de stockage (26) d'emports largables (32) pour aéronef (10), comprenant au moins un module de stockage (42), le module de stockage (42) comprenant un compartiment (44) et un tiroir (46),
le tiroir (46) délimitant au moins deux logements de stockage (60) d'emports largables (32), les logements (60) étant agencés successivement les uns à la suite des autres dans une direction transversale (Y) du rack, chaque logement (60) étant allongé selon une direction d'allongement non parallèle à la direction transversale (Y),
le tiroir (46) étant mobile par rapport au compartiment (44) dans la direction transversale (Y) entre une position rentrée, dans laquelle le tiroir (46) est disposé à l'intérieur du compartiment (44), et une position sortie, dans laquelle le tiroir (46) est disposé au moins en partie en dehors du compartiment (44).

2. Rack de stockage (26) selon la revendication 1, dans lequel le rack s'étend dans une direction d'élévation (Z) perpendiculaire à la direction transversale (Y), et, en projection dans un plan parallèle à la direction transversale (Y) et à la direction d'élévation (Z), la direction d'allongement de chaque logement (60) fait un angle compris entre 45° et 135° avec la direction transversale (Y) ; la direction d'allongement de chaque logement (60) étant de préférence perpendiculaire à la direction transversale (Y) ; la direction d'allongement de chaque logement (60) étant de préférence parallèle à la direction d'élévation (Z).

3. Rack de stockage (26) selon l'une quelconque des revendications 1 ou 2, dans lequel le tiroir (46) présente, lorsque le tiroir (46) est dans la position sortie, un flanc d'accès (66) aux logements (60) du tiroir (46), le flanc d'accès (66) étant propre à autoriser une opération de manutention du rack par un opérateur, l'opération de manutention comprenant le chargement d'un emport largable (32) dans un des logements (60) libres par le flanc d'accès (66) et/ou le déchargement d'un emport largable (32) stocké dans un des logements (60) par le flanc d'accès (66).

4. Rack de stockage (26) selon la revendication 3, dans lequel le tiroir (46) comprend un cadre (62) et au moins une barrière (68), la barrière (68) étant fixée au cadre (62) du côté du tiroir (46) opposé au côté du flanc d'accès (66), de sorte à s'opposer à une opération de manutention du côté opposé au flanc d'accès (66).

5. Rack de stockage (26) selon l'une quelconque des revendications 3 ou 4, dans lequel le tiroir (46) est propre à être assemblé de manière réversible entre deux configurations de manutention distinctes, de sorte que les côtés respectifs des flancs d'accès du tiroir (46) dans les configurations de manutention soient opposés l'un de l'autre ; le tiroir (46) étant propre à passer, de préférence, d'une des configurations de manutention à l'autre par rotation du tiroir (46), par exemple de 180° par rapport à la direction transversale (Y).

6. Rack de stockage (26) selon l'une quelconque des revendications précédentes, dans lequel le module de stockage (42) comprend un système de guidage (48) du déplacement du tiroir (46) par rapport au compartiment (44), le système de guidage (48) comprend au moins un rail coulissant (70), chaque rail coulissant comprenant un élément mobile, fixé au tiroir (46), et un élément fixe, fixé au compartiment (44), les éléments fixe et mobile du rail coulissant (70) coopérant l'un avec l'autre pour autoriser le déplacement du tiroir (46) entre les positions sortie et rentrée.

7. Rack de stockage (26) selon la revendication 6, prise en combinaison avec la revendication 5, dans lequel le système de guidage (48) est configuré pour que les éléments fixes présentent les mêmes positions respectives par rapport au compartiment (44) dans les configurations de manutention et pour que, pour chaque élément mobile, l'élément fixe avec lequel coopère l'élément mobile dans une des configurations de manutention soit différent de l'élément fixe avec lequel l'élément mobile coopère dans l'autre des configurations.

8. Rack de stockage (26) selon l'une quelconque des revendications précédentes, dans lequel le rack comprend un système de détection (54) des emports largables (32) stockés dans le rack, le système de détection (54) comprenant :
- pour chaque logement (60), un capteur de détection (74) propre à acquérir une donnée représentative d'une présence ou d'une absence d'emport largable (32) stocké dans le logement (60) ; et
- une unité de traitement (76) connectée à chaque capteur de détection (74), l'unité de traitement (76) étant configurée pour déterminer une information représentative d'une identification et/ou d'un comptage d'emports largables (32) stockés dans le rack à partir des données acquises par chaque capteur de détection (74) ;
ladite information représentative comprenant de préférence une matrice de positions des emports largables (32) stockés dans le rack, la matrice de positions étant représentative de la localisation de chaque logement (60) stockant un emport largable (32).

9. Rack de stockage (26) selon la revendication 8, dans lequel le système de détection (54) comprend, pour chaque module de stockage (42), un élément d'identification (82) du module de stockage (42) propre à être scanné, par un dispositif de lecture, pour obtenir ladite information déterminée par l'unité de traitement (76) ;
et/ou dans lequel le système de détection (54) comprend, pour chaque module de stockage (42), un dispositif d'affichage (84) connecté à l'unité de traitement (76), le dispositif d'affichage (84) comprenant un écran (86) et une unité de gestion d'affichage (88) configurée pour afficher sur l'écran (86) une représentation graphique de ladite information représentative déterminée par l'unité de traitement (76).

10. Rack de stockage (26) selon l'une quelconque des revendications précédentes, dans lequel le rack comprend au moins deux modules de stockage (42), les modules de stockage (42) étant agencés successivement les uns à la suite des autres dans une direction longitudinale (X) du rack, la direction longitudinal (X) étant perpendiculaire à la direction transversale (Y) et à la direction d'élévation (Z).

11. Rack de stockage (26) selon la revendication 10, dans lequel les logements (60) de chaque module de stockage (42A, 42B) présentent une même longueur de stockage d'emport, au moins deux des modules de stockage (42A, 42B) présentant des longueurs de stockage d'emport différentes.

12. Rack de stockage (26) selon la revendication 11, dans lequel un des modules est d'un premier type (42A), présentant une première longueur de stockage d'emport, et un autre des modules est d'un deuxième type (42B), présentant une deuxième longueur de stockage d'emport inférieure à la première longueur de stockage d'emport, au moins deux modules du deuxième type (42B) étant de préférence étagés dans la direction d'élévation (Z).

13. Rack de stockage (26) selon l'une quelconque des revendications précédentes, dans lequel le rack stocke des emports largables (32), chaque emport largable (32) étant allongé suivant une direction d'allongement, chaque emport largable (32) étant reçu dans un des logements (60) de sorte que la direction d'allongement soit parallèle à la direction d'élévation (Z).

14. Rack de stockage (26) selon la revendication 13, dans lequel chaque emport largable (32) stocké dans un des logements (60) est une bouée portant au moins un capteur acoustique, un système de diffusion de marqueur, le marqueur étant par exemple un fumigène ou un marqueur colorant.

15. Aéronef (10) comprenant au moins un rack de stockage (26) selon l'une quelconque des revendications précédentes.
